# EUROPÄISCHE PATENTSCHRIFT

(11) **EP 1 255 038 B1**
(45) Veröffentlichungstag und Bekanntmachung des Hinweises auf die Patenterteilung: **29.09.2004**
(21) Anmeldenummer: 02017439.7
(22) Anmeldetag: 06.05.1998
(51) Int. Cl.: F02M 61/14, F02M 69/46

(54) **Brennstoffeinspritzanlage**
Fuel injection system
Système d'injection de carburant

(30) Priorität: 25.06.1997 DE 19726990; 16.08.1997 DE 19735665
(43) Veröffentlichungstag der Anmeldung: 06.11.2002
(62) Teilanmeldung aus: 98933450.3
(73) Patentinhaber: ROBERT BOSCH GMBH, 70442 Stuttgart (DE)
(72) Erfinder: Gmelin, Karl, 74223 Flein (DE)

(56) Entgegenhaltungen:
- US-A- 3 412 718
- PATENT ABSTRACTS OF JAPAN vol. 1997, no. 03, 31. März 1997 (1997-03-31) & JP 08 312503 A (MITSUBISHI MOTORS CORP;MITSUBISHI AUTOMOB ENG CO LTD), 26. November 1996 (1996-11-26)
- PATENT ABSTRACTS OF JAPAN vol. 011, no. 025 (M-556), 23. Januar 1987 (1987-01-23) & JP 61 197757 A (AKIRA SUZUKI;OTHERS: 01), 2. September 1986 (1986-09-02)

## Beschreibung

### Stand der Technik

Die Erfindung betrifft eine Brennstoffeinspritzanlage zum direkten Einspritzen von Brennstoff in den Brennraum bzw. die Brennräume einer Brennkraftmaschine.

Die Erfindung geht aus von einer Brennstoffeinspritzanlage nach der Gattung des Anspruchs 1. Es ist bereits aus der JP-OS 08-312503 bekannt, an dem Zylinderkopf einer Brennkraftmaschine Aufnahmebohrungen für jeweils ein Brennstoffeinspritzventil für jeden Brennraum der Brennkraftmaschine vorzusehen, in welche jeweils ein Abspritzabschnitt des zugeordneten Brennstoffeinspritzventils zum direkten Einspritzen von Brennstoff in den jeweiligen Brennraum einsetzbar ist. Das in die Aufnahmebohrung des Zylinderkopfs eingesetzte Brennstoffeinspritzventil wird mittels einer als Spannpratze ausgebildeten Niederhaltevorrichtung gegen den in dem Brennraum herrschenden relativ hohen Verbrennungsdruck niedergehalten. Um die Brennstoffeinspritzventile in den Aufnahmebohrungen sicher zu fixieren, müssen durch die Spannpratzen relativ hohe Niederhaltekräfte auf die Brennstoffeinspritzventile ausgeübt werden, so daß die Brennstoffeinspritzventile in den Aufnahmebohrungen einen relativ festen, unverrückbaren Sitz haben. Für die Zuleitung des Brennstoffs an einen an jedem Brennstoffeinspritzventil vorgesehenen Zulaufabschnitt mit einer Brennstoff-Einlaßöffnung ist bei der JP-OS 08-312503 eine Brennstoff-Verteilerleitung vorgesehen, die die Brennstoffeinspritzventile mit einer Brennstoffpumpe verbindet. Die Brennstoff-Verteilerleitung weist für jedes Brennstoffeinspritzventil ein Aufnahmeelement auf, in welches der Zulaufabschnitt des Brennstoffeinspritzventils einführbar ist, so daß das Aufnahmeelement den Zulaufabschnitt tassenartig umschließt. Um die notwendige Dichtung zu erreichen, weist der Zulaufabschnitt jedes Brennstoffeinspritzventils ein Dichtungselement in Form eines O-Rings auf, der an der Innenwandung des Aufnahmeelements dichtend anliegt.

Aufgrund des relativ hohen Verbrennungsdrucks in jedem Brennraum der Brennkraftmaschine muß von der Niederhaltevorrichtung eine relativ hohe Niederhaltekraft aufgebracht werden, um die Brennstoffeinspritzventile in ihrer jeweiligen Aufnahmebohrung an dem Zylinderkopf sicher zu arretieren. Die dadurch bedingte starre Fixierung der Brennstoffeinspritzventile an dem Zylinderkopf erschwert jedoch die Montage der Brennstoff-Verteilerleitung, da es aufgrund der Fertigungstoleranzen sowohl der Aufnahmebohrungen für die Brennstoffeinspritzventile an dem Zylinderkopf als auch der Aufnahmeelemente für die Brennstoffeinspritzventile an der Brennstoff-Verteilerleitung zu Positionsabweichungen und Winkelabweichungen zwischen den Zulaufabschnitten der Brennstoffeinspritzventile einerseits und den Aufnahmeelementen der Brennstoff-Verteilerleitung andererseits kommt. Erschwerend kommt hinzu, daß die in den Aufnahmebohrungen des Zylinderkopfes montierten Brennstoffeinspritzventile durch die von den Spannpratzen ausgeübte Niederhaltekraft nicht umfänglich gleichmäßig sondern punktuell beaufschlagt werden, was eine geringfügige Verkippung der Brennstoffeinspritzventile in den Aufnahmebohrungen zur Folge hat. Die sich an den Zulaufabschnitten der Brennstoffeinspritzventile dadurch zusätzlich ergebenden Positionsund Winkelabweichungen erschweren die Montage der Brennstoff-Verteilerleitung zusätzlich. Der zwischen dem Zulaufabschnitt des Brennstoffeinspritzventils und dem Aufnahmeelement der Brennstoff-Verteilerleitung angeordnete O-Ring gleicht die Positions- und Winkelabweichungen nur in einem sehr geringen, unzureichenden Umfang aus. Bei den in der Praxis auftretenden Positions- und Winkelabweichungen besteht bei der aus der JP-OS 08-312503 bekannten Brennstoffeinspritzanlage neben dem Nachteil einer erschwerten Montage auch die Gefahr des Brennstoffaustritts an der die Positions- und Winkelabweichungen nicht ausgleichenden Dichtung.

Aus der DE-OS 29 08 095 ist es bekannt, ein nicht zum direkten Einspritzen von Brennstoff vorgesehenes Brennstoffeinspritzventil an einer Brennstoff-Verteilerleitung mittels eines Haltebügels zu fixieren und den Zulaufabschnitt des Brennstoffeinspritzventils über einen Stecknippel in die Brennstoff-Verteilerleitung einzuführen. Ein Ausgleich von Positions- und Winkelabweichungen an der Verbindung des Brennstoffeinspritzventils mit der Brennstoff-Verteilerleitung ist bei dieser Montageanordnung nicht vorgesehen und auch nicht erforderlich, da das Brennstoffeinspritzventil in der Aufnahmebohrung des Saugrohrs im Gegensatz zur Montage eines direkt einspritzenden Brennstoffeinspritzventils an dem Zylinderkopf nicht starr fixiert ist, sondern an einem in der Aufnahmebohrung des Saugrohrs vorgesehenen Dichtungselement beweglich ist.

Aus der EP-PS 0 491 582 ist es bekannt, die Brennstoffeinspritzventile an der Brennstoff-Verteilerleitung vor dem Einsetzen in die Aufnahmeöffnungen vorzumontieren. Diese bekannte Brennstoffeinspritzanlage ist jedoch ebenfalls nicht zum direkten Einspritzen von Brennstoff in den Brennraum der Brennkraftmaschine sondern zum indirekten Einspritzen von Brennstoff in das Saugrohr der Brennkraftmaschine geeignet, so daß an die Positionsund Winkeltoleranzen der vormontierten Brennstoffeinspritzventile keine besonderen Anforderungen zu stellen sind.

### Vorteile der Erfindung

Die erfindungsgemäße Brennstoffeinspritzanlage mit den kennzeichnenden Merkmalen des Anspruchs 1 hat demgegenüber den Vorteil, daß Positions- und Winkelabweichungen, die sich aufgrund der Fertigungs-Toleranzen und montagebedingter Toleranzen ergeben, sicher ausgeglichen werden. Dadurch wird die Montage der Brennstoffeinspritzanlage, insbesondere der Brennstoff-Verteilerleitung, wesentlich erleichtert. Eine Verspannung der Brennstoffeinspritzventile oder der Brennstoff-Verteilerleitung, wie sie bei einer Positions- und Winkelabweichungen nicht ausgleichenden Verbindung auftreten können, wird vermieden. Ferner treten keine Dichtungsprobleme zwischen der Brennstoff-Verteilerleitung und den Zulaufabschnitten der Brennstoffeinspritzventile auf, da die Dichtungselemente durch nicht ausgeglichene Positions- und Winkelabweichungen nicht einseitig deformiert werden. Umgekehrt läßt die erfindungsgemäß weitergebildete Brennstoffeinspritzanlage größere Toleranzen bei der Fertigung des Zylinderkopfes und der Brennstoff-Verteilerleitung zu, so daß der Fertigungsaufwand dieser Teile verringert und die Fertigungskosten entsprechend reduziert werden. Die Brennstoff-Verteilerleitung kann relativ nahe am Zylinderkopf montiert werden, so daß ein nur kleiner Bauraum benötigt wird.

Der Verbindungsbereich zwischen der Brennstoff-Verteilerleitung und dem Zulaufabschnitt der Brennstoffeinspritzventile kann im Querschnitt relativ groß bemessen werden, so daß beim Öffnen der Brennstoffeinspritzventile kein Druckeinbruch auftritt.

Durch die in den Unteransprüchen aufgeführten Maßnahmen sind vorteilhafte Weiterbildungen und Verbesserungen der im Anspruch 1 angegebenen Brennstoffeinspritzanlage möglich.

Bei einer Brennstoffeinspritzanlage nach Anspruch 1 ist es vorteilhaft, wenn der Mittelpunkt der Krümmung der kalottenförmigen Stützfläche im Bereich eines Dichtungselements liegt, an welchem der in die Aufnahmebohrung eingesetzte Abspritzabschnitt des Brennstoffeinspritzventils schwenkbar gelagert ist. Auf diese Weise ist gewährleistet, daß der an dem Brennstoffeinspritzventil vorgesehene Stützabschnitt in jeder Schwenkstellung des Brennstoffeinspritzventils auf der kalottenförmigen Stützfläche vollständig aufliegt. Die kalottenförmige Stützfläche kann vorteilhaft an einem Stützkörper ausgebildet sein, der in die Aufnahmebohrung des Zylinderkopfes einsetzbar ist. Dadurch kann die Fertigung vereinfacht werden, indem der Stützkörper als separates Bauteil, insbesondere als separat gefertigtes Drehteil, ausgebildet ist und unabhängig von dem Zylinderkopf gefertigt wird.

### Zeichnung

Ausführungsbeispiele der Erfindung sind in der Zeichnung vereinfacht dargestellt und in der nachfolgenden Beschreibung näher erläutert. Es zeigen Fig. 1 ein Ausführungsbeispiel einer auszugsweise dargestellten Brennstoffeinspritzanlage in einer teilweise geschnittenen Darstellung, Fig. 2 ein erstes Ausführungsbeispiel einer auszugsweise dargestellten erfindungsgemäßen Brennstoffeinspritzanlage in einer teilweise geschnittenen Darstellung, Fig. 3 ein Ausführungsbeispiel einer auszugsweise dargestellten Brennstoffeinspritzanlage in einer perspektivischen Darstellung und Fig. 4 ein zweites Ausführungsbeispiel einer auszugsweise dargestellten erfindungsgemäßen Brennstoffeinspritzanlage in einer teilweise geschnittenen Darstellung.

### Beschreibung der Ausführungsbeispiele

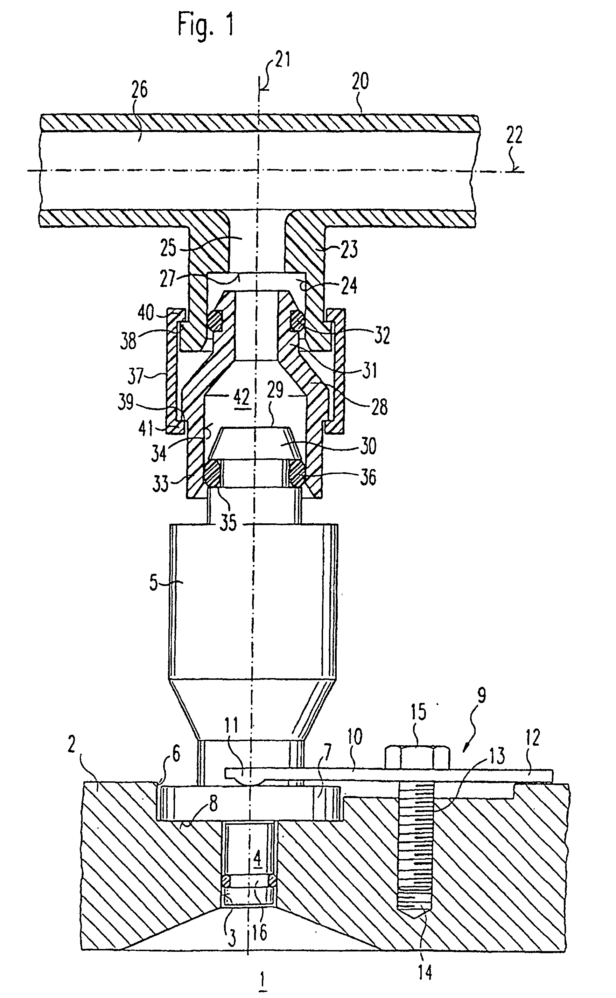

Fig. 1 zeigt eine Brennstoffeinspritzanlage entsprechend einem Ausführungsbeispiel in einer nur auszugsweisen und teilweise geschnittenen Darstellung.

Die Brennstoffeinspritzanlage dient zum direkten Einspritzen von Brennstoff in zumindest einen Brennraum, typischerweise jedoch mehrere, z. B. vier Brennräume einer Brennkraftmaschine. In der auszugsweisen Darstellung der Fig. 1 ist lediglich ein Brennraum 1 der Brennkraftmaschine dargestellt, der mittels eines Zylinderkopfes 2 abgeschlossen ist. Der Zylinderkopf 2 weist eine Aufnahmebohrung 3 auf, in welche ein Abspritzabschnitt 4 eines Brennstoffeinspritzventils 5 einsetzbar ist. Dabei ist für jeden Brennraum 1 der Brennkraftmaschine zumindest ein Brennstoffeinspritzventil 5 vorgesehen. Die Aufnahmebohrung 3 ist an einer Ringdichtung 16 gegen die Verbrennungsgase des Brennraums 1 abgedichtet. Auf der dem Brennraum 1 abgelegenen Seite schließt sich an die Aufnahmebohrung 3 eine in dem Zylinderkopf 2 ausgebildete Vertiefung 6 an, die einen Flansch 7 des in die Aufnahmebohrung 3 eingesetzten Brennstoffeinspritzventils 5 aufnimmt.

In dem in Fig. 1 dargestellten Ausführungsbeispiel liegt der Flansch 7 auf einer planen Stützfläche 8 des Zylinderkopfes 2 auf und wird mittels einer in dem Ausführungsbeispiel als Spannpratze 9 ausgebildeten Niederhaltevorrichtung gegen die Stützfläche 8 des Zylinderkopfes 2 gepreßt. Die von der Spannpratze 9 ausgeübte Niederhaltekraft ist dabei größer als die von dem Verbrennungsdruck der Verbrennungsgase in dem Brennraum 1 ausgeübte Gegenkraft, so daß der Abspritzabschnitt 4 des Brennstoffeinspritzventils 5 auch bei hohem Verbrennungsdruck sicher an dem Zylinderkopf 2 fixiert ist.

Die Spannpratze 9 besteht aus einem, z. B. gabelförmig ausgebildeten Spannhebel 10, der an einem Auflageabschnitt 11 auf dem Flansch 7 des Brennstoffeinspritzventils 5 aufliegt. Dabei kann der Spannhebel 10 das Brennstoffeinspritzventil 5 gabelartig so umfassen, daß auch auf der in Fig. 1 rückwärtigen Seite des Brennstoffeinspritzventils 5 ein weiterer Auflageabschnitt auf dem Flansch 7 aufliegt. Der Spannhebel 10 liegt an seinem dem bzw. den Auflageabschnitt(en) 11 gegenüberliegenden Ende 12 auf dem Zylinderkopf 2 auf und wird mittels einer Spannschraube 13, die in eine Gewindebohrung 14 des Zylinderkopfes 2 einschraubbar ist, gegen den Zylinderkopf 2 vorgespannt. An einem, z. B. als Sechskant ausgebildeten Schraubenkopf 15 kann bei der Montage des Brennstoffeinspritzventils 5 an der Spannschraube 13 ein entsprechendes Werkzeug, z. B. ein Schraubenschlüssel, angreifen.

Zur Versorgung des in Fig. 1 dargestellten Brennstoffeinspritzventils 5 und der dem direkten Einspritzen von Brennstoff in die in Fig. 1 nicht dargestellten, weiteren Brennräume der Brennkraftmaschine dienenden, in Fig. 1 ebenfalls nicht dargestellten weiteren Brennstoffeinspritzventile ist eine Brennstoff-Verteilerleitung 20 vorgesehen. Die Brennstoff-Verteilerleitung 20 ist rohrförmig ausgebildet und erstreckt sich entlang einer senkrecht zu der Längsachse 21 des Brennstoffeinspritzventils 5 und der Aufnahmebohrung 3 des Zylinderkopfes 2 orientierten Achse 22. Die Brennstoff-Verteilerleitung 20 ist mit allen Brennstoffeinspritzventilen 5 der Brennstoffeinspritzanlage verbunden und weist an der Position eines jeden Brennstoffeinspritzventils 5 einen Verbindungsstutzen 23 auf, der in Form eines Stufen-Hohlzylinders ausgebildet ist und einen Führungsabschnitt 24 aufweist, welcher über einen Verbindungskanal 25 mit dem Hauptkanal 26 der Brennstoff-Verteilerleitung 20 in Verbindung steht.

In dem Bereich eines jeden Verbindungsstutzens 23 weist die Brennstoff-Verteilerleitung 20 für jedes Brennstoffeinspritzventil 5 eine Brennstoff-Auslaßöffnung 27 auf. An die Brennstoff-Auslaßöffnung 27 der Brennstoff-Verteilerleitung 20 schließt sich stromabwärts ein erfindungsgemäßes Zwischenstück 28 an, welches den Brennstoff einer Brennstoff-Einlaßöffnung 29 an einem Zulaufabschnitt 30 des Brennstoffeinspritzventils 5 zuführt. In dem in Fig. 1 dargestellten Ausführungsbeispiel weist das Zwischenstück 28 einen stromaufwärtigen, verjüngten Abschnitt 31 auf, welcher in den Führungsabschnitt 24 des Verbindungsstutzens 23 einführbar ist und über ein als O-Ring ausgeführtes erstes Dichtungselement 32 gegenüber dem Verbindungsstutzen 23 der Brennstoff-Verteilerleitung 20 abgedichtet ist. Der stromaufwärtige Abschnitt 31 des Zwischenstücks 28 ist in dem Führungsabschnitt 24 des Verbindungsstutzens 23 gleitend verschiebbar, indem das erste Dichtungselement 32 an der Innenwandung des Führungsabschnitts 24 entlanggleitet. Ferner ist das Zwischenstück 28 gegenüber dem Verbindungsstutzen 23 in vorgegebenen Grenzen schwenkbar, wobei der sich beim Verschwenken verändernde Spaltabstand zwischen dem stromaufwärtigen Abschnitt 31 des Zwischenstücks 28 und dem Führungsabschnitt 24 des Verbindungsstutzens 23 durch das erste Dichtungselement 32 ausgeglichen wird.

Das Zwischenstück 28 weist ferner einen stromabwärtigen Abschnitt 33 auf, an dessen Innendurchmesser ein Führungsabschnitt 34 für den Zulaufabschnitt 30 des Brennstoffeinspritzventils 5 ausgebildet ist. Der Zulaufabschnitt 30 weist eine Nut 35 für ein im Ausführungsbeispiel als O-Ring 36 ausgebildetes Dichtungselement auf, welches den Spaltabstand zwischen dem stromabwärtigen Abschnitt 33 und dem Zulaufabschnitt 30 des Brennstoffeinspritzventils 5 abdichtet. Der Zulaufabschnitt 30 ist in dem Führungsabschnitt 34 ebenfalls gleitend verschiebbar, indem das Dichtungselement 36 an der Innenwandung des stromabwärtigen Abschnitts 33 des Zwischenstücks 28 entlanggleitet. Ferner ist der Zulaufabschnitt 30 gegenüber dem Zwischenstück 28 in vorgegebenen Grenzen verschwenkbar, wobei das Dichtungselement 36 beim Verschwenken geringfügig deformiert wird und die Veränderung des Spaltabstands zwischen dem stromabwärtigen Abschnitt 33 des Zwischenstücks 28 und dem Zulaufabschnitt 30 des Brennstoffeinspritzventils 5 entsprechend ausgleicht.

Durch die verschiebbare und verschwenkbare Anordnung des Zwischenstücks 28 an dem Verbindungsstutzen 23 einerseits, und die verschiebbare und verschwenkbare Anordnung des Zulaufabschnitts 30 des Brennstoffeinspritzventils 5 an dem Zwischenstück 28 andererseits wird eine gelenkartig abwinkelbare und verkürz- bzw. verlängerbare Teleskopverbindung zwischen der Brennstoff-Verteilerleitung 20 und dem Brennstoffeinspritzventil 5 erzielt, die es ermöglicht, die Brennstoff-Verteilerleitung 20 hochgradig flexibel an den Brennstoffeinspritzventilen 5 zu montieren. Ein fertigungsoder montagebedingter Winkel- oder Positionsversatz des Zulaufabschnitts 30 kann durch die flexible Verbindung mittels des Zwischenstücks 28 in einem weiten Umfang ausgeglichen werden, ohne daß die Dichtungselemente 32 und 36 dabei so weit deformiert werden, daß an den Dichtungselementen 32 und 36 Leckageprobleme auftreten.

Vorzugsweise stimmt der Innen-Durchmesser des Führungsabschnitts 24 des Verbindungsstutzens 23 mit dem Innen-Durchmesser des Führungsabschnitts 34 des Zwischenstücks 28 im wesentlichen überein. Dadurch wird vermieden, daß das Zwischenstück 28 durch den Brennstoffdruck in Richtung der Längsachse 21 mit einer Kraftkomponente beaufschlagt wird, die zu einer ungewollten Verschiebung des Zwischenstücks 28 führen könnte.

Das Zwischenstück 28 kann über ein Sicherungselement 37 an dem zugehörigen Verbindungsstutzen 23 gesichert, bzw. fixiert werden. Das Zwischenstück 28 kann daher an der Brennstoff-Verteilerleitung 20 vormontiert werden, was die Montagefreundlichkeit verbessert. Ferner ist sichergestellt, daß das Zwischenstück 28 bei einem Abziehen der Brennstoff-Verteilerleitung 20 an dem Verbindungsstutzen 23 anhaftet und nicht die Verbindung zwischen dem Zwischenstück 28 und dem Verbindungsstutzen 23 sondern die Verbindung zwischen dem Zwischenstück 28 und dem Zulaufabschnitt 30 des Brennstoffeinspritzventils 5 gelöst wird. Auf diese Weise ist gewährleistet, daß das Zwischenstück 28 bei Montage- und Demontagearbeiten nicht aus dem Verbindungsstutzen 23 herausgezogen wird und verloren gehen kann. Das Sicherungselement 37 ist im Ausführungsbeispiel hülsenförmig ausgebildet und umschließt einen stromabwärtigen Bereich des Verbindungsstutzens 23 und einen stromaufwärtigen Bereich des Zwischenstücks 28 ringförmig. Der Verbindungsstutzen 23 kann eine erste Rastnase 38 und das Zwischenstück 28 eine zweite Rastnase 39 aufweisen, die mit einem ersten innenseitigen Überstand 40 und einem zweiten innenseitigen Überstand 41 des Sicherungselements 37 zu zwei Rastverbindungen zusammenwirken.

Die Brennstoff-Verteilerleitung 20, die Zwischenstücke 28 und die Sicherungselemente 37 können beispielsweise mittels eines Kunststoff-Spritzgußverfahrens aus einem geeigneten Kunststoffmaterial kostengünstig hergestellt werden.

Jedes Zwischenstück 28 kann in seinem Innendurchmesser so groß bemessen sein, daß das Zwischenstück 28 vor der Brennstoff-Einlaßöffnung 29 des Brennstoffeinspritzventils 5 ein Druckschwankungen ausgleichendes Brennstoffreservoir 42 bildet. Ferner ermöglicht der relativ groß bemessene Innendurchmesser des Zwischenstücks 28 einen ungedrosselten Zufluß des Brennstoffs von der Brennstoff-Auslaßöffnung 27 der Brennstoff-Verteilerleitung 20 zu der Brennstoff-Einlaßöffnung 29 des Brennstoffeinspritzventils 5.

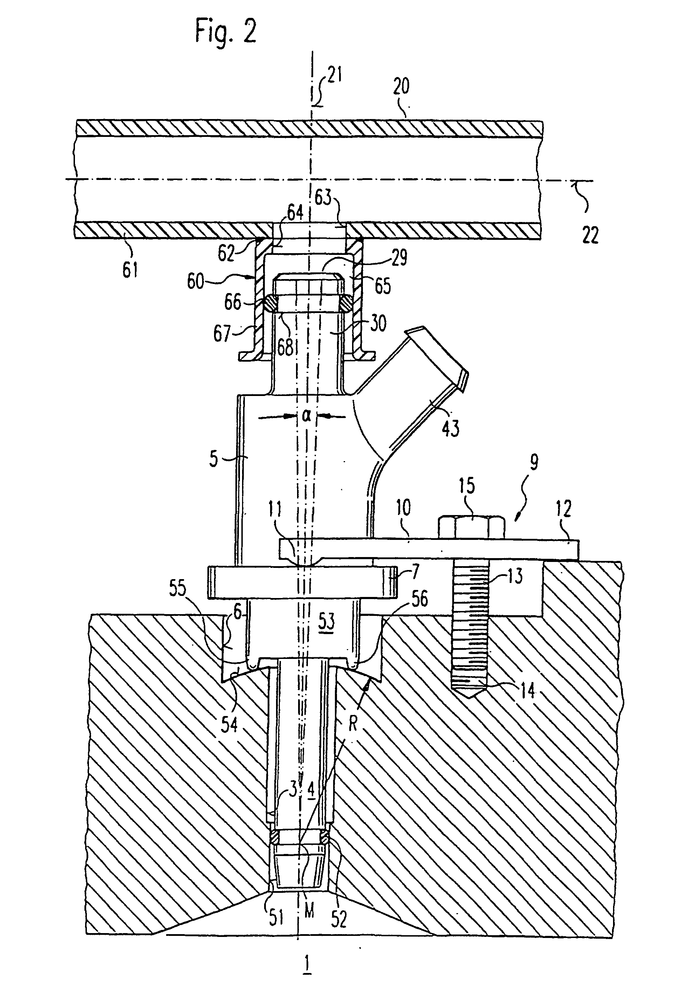

Fig. 2 zeigt ein erstes Ausführungsbeispiel einer erfindungsgemäßen Brennstoffeinspritzanlage in einer auszugsweisen, teilweise geschnittenen Darstellung.

Bereits anhand von Fig. 1 beschriebene Elemente sind mit übereinstimmenden Bezugszeichen versehen, so daß sich diesbezüglich eine wiederholende Beschreibung erübrigt. In Fig. 2 ist ein Anschlußstecker 43 zur elektrischen Kontaktierung des Brennstoffeinspritzventils 5 zusätzlich erkennbar, dem im Rahmen dieser Erfindung keine wesentliche Bedeutung zukommt.

Wie auch bei dem in Fig. 1 gezeigten Ausführungsbeispiel weist der Zylinderkopf 2 für jedes Brennstoffeinspritzventil 5 eine in den zugeordneten Brennraum 1 mündende Aufnahmebohrung 3 zur Aufnahme des Abspritzabschnitts 4 des Brennstoffeinspritzventils 5 auf. Die Aufnahmebohrung 3 ist im in Fig. 2 dargestellten Ausführungsbeispiel als Stufenbohrung ausgebildet und weist einen verjüngten Abschnitt 51 auf, an welchem ein erstes Dichtungselement 52 dichtend anliegt und den Abspritzabschnitt 4 gegenüber dem Zylinderkopf 2 abdichtet. Das Brennstoffeinspritzventil 5 ist an dem ersten, im Ausführungsbeispiel als O-Ring ausgeführten Dichtungselement 52 so schwenkbar gelagert, daß es in vorgegebenen Grenzen um den Raumwinkelbereich α geringfügig verschwenkbar ist.

Um in jeder Schwenkposition eine Abstützung eines Stützabschnitts 53 des Brennstoffeinspritzventils 5 an einer Stützfläche 54 des Zylinderkopfes 2 zu gewährleisten, ist die Stützfläche 54 in Form einer Teilkugelfläche kalottenförmig ausgeformt. Die Stützfläche 54 umgibt die Aufnahmebohrung 3 konzentrisch. Der Krümmungsradius R der Stützfläche 54 ist so bemessen, daß der Krümmungsmittelpunkt M der Krümmung der kalottenförmigen Stützfläche 54 im Bereich des ersten Dichtungselements 52 liegt, so wie dies in Fig. 2 verdeutlicht ist. Der Stützabschnitt 53 des Brennstoffeinspritzventils 5 weist an seinem abspritzseitigen Ende im Ausführungsbeispiel mehrere Stützen 55, 56 auf, die an dem Stützabschnitt 53 ringförmig angeordnet sind. Alternativ kann auch eine einzige ringförmig geformte Stütze bzw. können mehrere teilringförmig geformte Stützen Verwendung finden. Weiterhin alternativ kann die abspritzseitige Fläche des Stützabschnitts 53 eine kalottenförmige, konkav geformte Ausnehmung aufweisen, deren Krümmungsradius mit der konvex geformten, kalottenförmigen Stützfläche 54 übereinstimmt. Bei der letztgenannten Alternative wird eine bessere thermische Kopplung zwischen dem Brennstoffeinspritzventil 5 und dem Zylinderkopf 2 erreicht. Bei jeder der vorgenannten Alternativen ist sichergestellt, daß der Stützabschnitt 53 in jeder Schwenkstellung des Brennstoffeinspritzventils 5 auf der Stützfläche 54 formschlüssig zur Anlage bringbar ist.

Durch die vorstehend beschriebene Anordnung wird ein Verschwenken des Brennstoffeinspritzventils 5 gegenüber der Längsachse 21 innerhalb des Raumwinkelbereichs α ermöglicht, wobei durch die Spannpratze 9 in dem gesamten Schwenkbereich eine ausreichende Niederhaltekraft auf das Brennstoffeinspritzventil 5 übertragbar ist.

Der Zulaufabschnitt 30 des Brennstoffeinspritzventils 5 ist in ein tassenartiges Aufnahmeelement 60 einsetzbar. Das Aufnahmeelement 60 kann entweder einstückig mit dem Hauptkörper 61 der Brennstoff-Verteilerleitung 20 ausgebildet sein oder, wie im in Fig. 2 dargestellten Ausführungsbeispiel, über eine Schweißnaht 62 mit dem Hauptkörper 61 der Brennstoff-Verteilerleitung 20 verbunden sein. Die Brennstoff-Verteilerleitung 20 weist für jedes Brennstoffeinspritzventil 5 eine Brennstoff-Auslaßöffnung 63 auf, die einer entsprechenden in dem Aufnahmeelement 60 ausgebildeten Öffnung 64 gegenüberliegt. Der Innenraum 65 des Aufnahmeelements ist mittels eines an dem Zulaufabschnitt 30 des Brennstoffeinspritzventils 5 vorgesehenen zweiten Dichtungselements 66 abgedichtet. Der Zulaufabschnitt 30 ist in dem Aufnahmeelement 60 verschiebbar, indem das als O-Ring ausgebildete zweite Dichtungselement 66 an der Wandung 67 des Aufnahmeelements 60 entlanggleitet. Das zweite Dichtungselement 66 ist mittels einer Nut 68 an dem Zulaufabschnitt 30 des Brennstoffeinspritzventils 5 arretiert. Der Zulaufabschnitt 30 wird von dem Aufnahmeelement 60 so aufgenommen, daß das Brennstoffeinspritzventil 5 in vorgegebenen Grenzen in dem Aufnahmeelement 60 schwenkbar fixiert ist.

Durch die in vorgegebenen Grenzen schwenkbare Anordnung des Brennstoffeinspritzventils 5 in der Aufnahmeöffnung 3 des Zylinderkopfs 2 einerseits und dem Aufnahmeelement 60 der Brennstoff-Verteilerleitung 20 andererseits kann ein durch Fertigungstoleranzen oder Montagetoleranzen bedingter Winkel- oder Positionsversatz sicher ausgeglichen werden.

Bei der Montage der erfindungsgemäßen Brennstoffeinspritzanlage wird zweckmäßigerweise so vorgegangen, daß zunächst sämtliche Brennstoffeinspritzventile 5 in die entsprechende Aufnahmebohrung 3 des Zylinderkopfes 2 eingesetzt werden, ohne daß die Spannschrauben 13 der Spannpratzen 9 angezogen werden. Die Brennstoffeinspritzventile 5 sind in diesem Montagezustand innerhalb des Raumwinkelbereichs α noch verschwenkbar. Sodann wird die Brennstoff-Verteilerleitung 20 auf sämtliche Brennstoffeinspritzventile 5 aufgesetzt, indem die Zulaufabschnitte 30 der Brennstoffeinspritzventile 5 in die Aufnahmeelemente 60 eingeführt werden. An die Fertigungstoleranzen für die Positionierung der Aufnahmebohrungen 3 an dem Zylinderkopf 2 und der Aufnahmeelemente 60 an der Brennstoff-Verteilerleitung 20 sind dabei nur relativ geringe Anforderungen zu stellen, da wie erwähnt ein Positions- oder Winkelversatz in vorgegebenen Grenzen durch die erfindungsgemäße Weiterbildung ausgeglichen wird. Nach dem Montieren der Brennstoff-Verteilerleitung 20 an sämtlichen Brennstoffeinspritzventilen 5 können die Spannschrauben 13 der Spannpratzen 9 angezogen werden, so daß die Brennstoffeinspritzventile 5 schließlich an dem Zylinderkopf 2 starr fixiert sind.

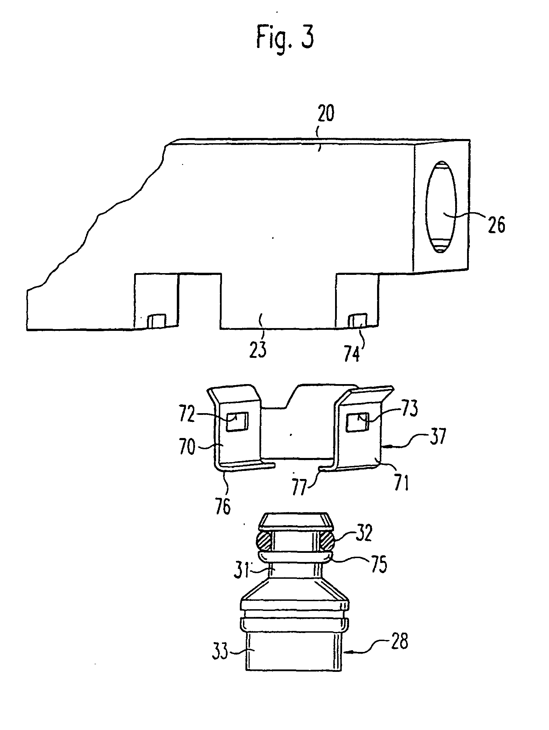

Fig. 3 zeigt ein weiteres Ausführungsbeispiel einer Brennstoffeinspritzanlage in einer ausschnittsweisen, perspektivischen Darstellung. Das Grundkonzept dieses Ausführungsbeispiels entspricht dem anhand von Fig. 1 bereits erläuterten Ausführungsbeispiel. Die Besonderheiten ergeben sich insbesondere aus der Ausgestaltung des Sicherungselements 37 und dessen Rastverbindungen mit der Brennstoff-Verteilerleitung 20 einerseits und mit dem Zwischenstück 28 andererseits. Bereits anhand von Fig. 1 beschriebene Elemente sind mit übereinstimmenden Bezugszeichen versehen, um die Zuordnung zu erleichtern. Auf eine wiederholende Beschreibung kann daher insoweit verzichtet werden.

Das Sicherungselement 37 ist im in Fig. 3 dargestellten Ausführungsbeispiel im wesentlich U-förmig geformt und als Klammer ausgebildet. An den beiden Schenkelabschnitten 70 und 71 des Sicherungselements 37 ist jeweils eine Ausnehmung 72 und 73 vorgesehen, in welche jeweils eine an dem Verbindungsstutzen 23 der Brennstoff-Verteilerleitung 20 vorgesehene Rastnase 74 rastend eingreift. Auf diese Weise ist die rastende Verbindung mit der Brennstoff-Verteilerleitung 20 realisiert.

Das Zwischenstück 28 weist stromabwärts des Dichtungs-Elements 32 einen Wulst 75 auf. Die beiden Schenkelabschnitte 70 und 71 des Sicherungselements 37 weisen jeweils an ihrem stromabwärtigen Ende einen nach innen ragenden Überstand 76 bzw. 77 auf, der beim Zusammenfügen des Sicherungselements 37 mit dem Zwischenstück 28 den Wulst 75 rastend übergreift. Auf diese Weise ist die Rastverbindung zwischen dem Sicherungselement 37 und dem Zwischenstück 28 realisiert.

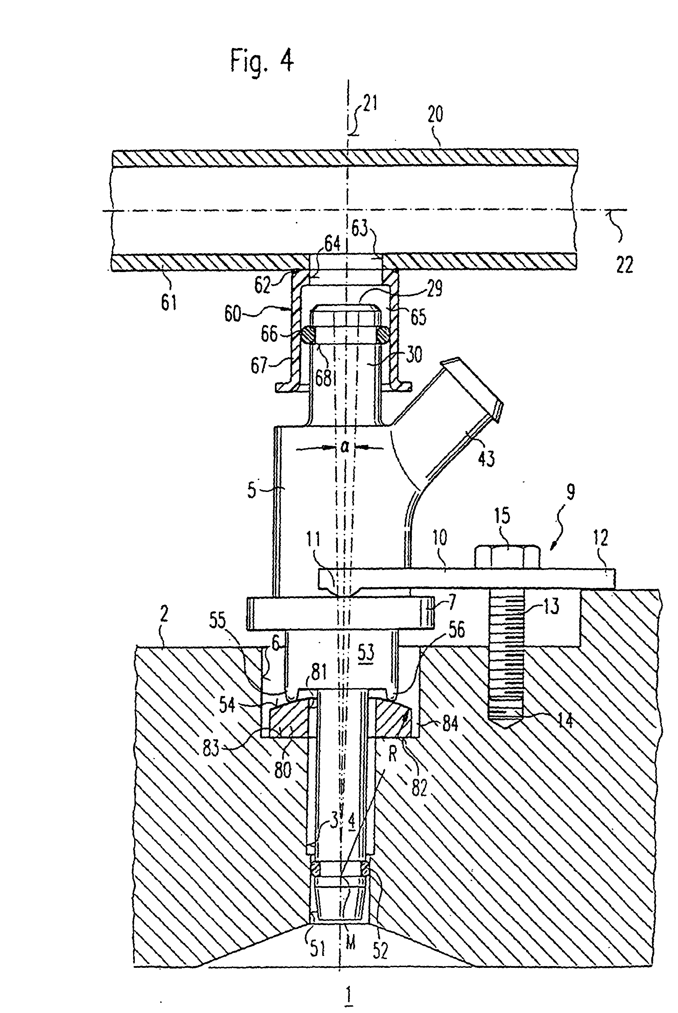

Fig. 4 zeigt eine erfindungsgemäße Brennstoffeinspritzanlage entsprechend einem zweiten Ausführungsbeispiel in einer nur auszugsweisen und teilweise geschnittenen Darstellung. Das Grundkonzept dieses Ausführungsbeispiels ist mit dem in Fig. 2 gezeigten Ausführungsbeispiel identisch. Bereits beschriebene Elemente sind daher mit übereinstimmenden Bezugszeichen versehen, so daß sich die nachfolgende Beschreibung auf die Unterschiede des in Fig. 4 dargestellten Ausführungsbeispiels gegenüber dem in Fig. 2 dargestellten Ausführungsbeispiel beschränken kann.

Bei dem in Fig. 4 dargestellten Ausführungsbeispiel ist die Stützfläche 54 nicht unmittelbar an dem Zylinderkopf 2 ausgebildet, sondern an einem separaten Stützkörper 80. Der Stützkörper 80 ist in die Aufnahmebohrung 3 des Zylinderkopfes 2 einsetzbar. Der Stützkörper 80 ist im dargestellten Ausführungsbeispiel ringförmig ausgebildet und weist eine Bohrung 81 auf, in welche der Abspritzabschnitt 4 des Brennstoffeinspritzventils 5 einführbar ist, so daß der ringförmige Stützkörper 80 im monierten Zustand den Abspritzabschnitt 4 des Brennstoffeinspritzventils umschließt. An seiner der Stützfläche 54 gegenüberliegenden Oberfläche 82 ist der Stützkörper 80 vorzugsweise eben ausgebildet, so daß sich die Oberfläche 82 des Stützkörpers 80 an einer ebenfalls eben ausgebildeten Oberfläche 83 des Zylinderkopfes 2 in planparalleler Anlage befindet. Der Durchmesser des Stützkörpers 80 kann mit dem Durchmesser der Vertiefung 6 des Zylinderkopfes 2 im wesentlichen identisch sein. Im dargestellten Ausführungsbeispiel ist der Außendurchmesser des ringförmigen Stützkörpers 80 jedoch etwas geringer bemessen als der Innendurchmesser der Vertiefung 6, so daß ein umlaufender Ringspalt 84 entsteht. Der Ringspalt 84 verbessert den Toleranzausgleich, so daß an die Fertigungsgenauigkeit geringere Anforderungen zu stellen sind. Der Stützkörper 80 wird in der Vertiefung 6 durch die von der Spannpratze 9 ausgeübte Niederhaltekraft auf dem Zylinderkopf 2 in Anlage gehalten und gegen Verrutschen gesichert. Zusätzlich kann der Stützkörper 80 mit dem Zylinderkopf 2 durch Verschweißen, Verschrauben, Verkleben oder dergleichen verbunden sein. Auch bei dem in Fig. 4 dargestellten Ausführungsbeispiel umgibt die Stützfläche 54 die Aufnahmebohrung 3 konzentrisch. Der Krümmungsradius R der Stützfläche 54 ist so bemessen, daß der Krümmungsmittelpunkt M der Krümmung der kalottenförmigen Stützfläche 54 im Bereich des ersten Dichtungselements 52 liegt.

Durch die erfindungsgemäße Weiterbildung wird die Montagefreundlichkeit der Brennstoffeinspritzanlage wesentlich verbessert. Da an die Fertigungstoleranzen gegenüber einer konventionellen Ausbildung verminderte Anforderungen zu stellen sind, ergeben sich auch verminderte Fertigungskosten für den Zylinderkopf 2 und die Brennstoff-Verteilerleitung 20.

## Patentansprüche

1. Brennstoffeinspritzanlage zum direkten Einspritzen von Brennstoff in zumindest einen Brennraum (1) einer Brennkraftmaschine mit zumindest einem Brennstoffeinspritzventil (5) für jeden Brennraum (1), das jeweils an einem Abspritzabschnitt (4) in eine zugeordnete, an einem Zylinderkopf (2) der Brennkraftmaschine ausgebildete Aufnahmebohrung (3) einsetzbar ist und an einem Zulaufabschnitt (30) eine Brennstoff-Einlassöffnung (29) aufweist, und einer Brennstoff-Verteilerleitung (20), die für jedes Brennstoffeinspritzventil (5) eine mit der Brennstoff-Einlassöffnung (29) des Brennstoffeinspritzventils (5) verbindbare Brennstoff-Auslassöffnung (63) aufweist,
**dadurch gekennzeichnet, dass**
an jeder Aufnahmebohrung (3) auf der der Brennstoff-Verteilerleitung (20) zugewandten Seite eine kalottenförmige Stützfläche (54) ausgebildet ist, auf welcher sich ein Stützabschnitt (53) eines in die Aufnahmebohrung (3) eingesetzten Brennstoffeinspritzventils (5) so abstützt, dass das Brennstoffeinspritzventil (5) an seinem Abspritzabschnitt (4) in der Aufnahmebohrung (3) in einem vorgegebenen Winkelbereich (α) schwenkbar fixiert ist, und
dass an jeder Brennstoff-Auslassöffnung (63) der Brennstoff-Verteilerleitung (20) jeweils ein Aufnahmeelement (60) vorgesehen ist, das die Brennstoff-Einlassöffnung (29) des zugeordneten Brennstoffeinspritzventils (5) dichtend so aufnimmt, dass das Brennstoffeinspritzventil (5) an seinem Zulaufabschnitt (30) in dem Aufnahmeelement (60) in einem vorgegebenen Winkelbereich schwenkbar fixiert ist.

2. Brennstoffeinspritzanlage nach Anspruch 1,
**dadurch gekennzeichnet, dass**
jede kalottenförmige Stützfläche (54) die jeweilige Aufnahmebohrung (3) konzentrisch umgibt.

3. Brennstoffeinspritzanlage nach Anspruch 2,
**dadurch gekennzeichnet, dass**
der Abspritzabschnitt (4) jedes Brennstoffeinspritzventils (5) in der Aufnahmebohrung (3) an einem ersten Dichtungselement (52) in vorgegebenen Grenzen schwenkbar gelagert ist und der Mittelpunkt (M) der Krümmung der zugeordneten kalottenförmigen Stirnfläche (54) im Bereich des ersten Dichtungselements (52) liegt.

4. Brennstoffeinspritzanlage nach einem der Ansprüche 1 bis 3,
**dadurch gekennzeichnet, dass**
der Stützabschnitt (53) jedes Brennstoffeinspritzventils (5) eine ringförmig geformte Stütze oder mehrere ringförmig angeordnete Stützen (55, 56) aufweist, welche auf der zugeordneten kalottenförmigen Stützfläche (54) unabhängig von der Schwenkstellung des Brennstoffeinspritzventils (5) zur Auflage bringbar ist bzw. sind.

5. Brennstoffeinspritzanlage nach einem der Ansprüche 1 bis 4,
**dadurch gekennzeichnet, dass**
jedes Aufnahmeelement (60) den Zulaufabschnitt (30) des in das jeweilige Aufnahmeelement (60) eingesetzten Brennstoffeinspritzventils (5) umschließt und jeder Zulaufabschnitt (30) ein zweites Dichtungselement (66) aufweist, das an der Wandung (67) des Aufnahmeelements gleitend verschiebbar ist.

6. Brennstoffeinspritzanlage nach einem der Ansprüche 1 bis 5,
**dadurch gekennzeichnet, dass**
zumindest eine Niederhaltevorrichtung (9) vorgesehen ist, um jedes Brennstoffeinspritzventil (5) in der zugeordneten Aufnahmebohrung (3) gegen den in dem zugeordneten Brennraum (1) herrschenden Verbrennungsdruck niederzuhalten.

7. Brennstoffeinspritzanlage nach einem der Ansprüche 1 bis 6,
**dadurch gekennzeichnet, dass**
die kalottenförmige Stützfläche (54) an einem Stützkörper (80) ausgebildet ist, der in die Aufnahmebohrung (3) einsetzbar ist.

8. Brennstoffeinspritzanlage nach Anspruch 7,
**dadurch gekennzeichnet, dass**
der Stützkörper (80) ringförmig ausgebildet ist und den Abspritzabschnitt (4) des Brennstoffeinspritzventils (5) umschließt.

## Claims

1. Fuel injection system for the direct injection of fuel into at least one combustion space (1) of an internal combustion engine, with at least one fuel injection valve (5) for each combustion space (1), which fuel injection valve can be inserted in each case at an injection portion (4) into an assigned receiving bore (3) formed on a cylinder head (2) of the internal combustion engine and has a fuel inlet orifice (29) at an inflow portion (30), and with a fuel distributor line (20) which has for each fuel injection valve (5) a fuel outlet orifice connectable to the fuel inlet orifice (29) of the fuel injection valve (5), **characterized in that** each receiving bore (3) has formed on it, on the side facing the fuel distributor line (20), a supporting surface (54) in the form of a spherical cap, on which a supporting portion (53) of a fuel injection valve (5) inserted into the receiving bore (3) is supported in such a way that the fuel injection valve (5) is fixed at its injection portion (4) in the receiving bore (3) pivotably within a predetermined angular range (α), and **in that** each fuel outlet orifice (63) of the fuel distributor line (20) has provided on it in each case a receiving element (60) which receives the fuel inlet orifice (29) of the assigned fuel injection valve (5) sealingly in such a way that the fuel injection valve (5) is fixed at its inflow portion (30) in the receiving element (60) pivotably within a predetermined angular range.

2. Fuel injection system according to Claim 1, **characterized in that** each supporting surface (54) in the form of a spherical cap surrounds the respective receiving bore (3) concentrically.

3. Fuel injection system according to Claim 2, **characterized in that** the injection portion (4) of each fuel injection valve (5) is mounted in the receiving bore (3) pivotably within predetermined limits at a first sealing element (52), and the centre (M) of the curvature of the assigned supporting surface (54) in the form of a spherical cap lies in the region of the first sealing element (52).

4. Fuel injection system according to one of Claims 1 to 3, **characterized in that** the supporting portion (53) of each fuel injection valve (5) has an annularly shaped support or a plurality of annularly arranged supports (55, 56) which can be brought to bear on the assigned supporting surface (54) in the form of a spherical cap independently of the pivoting position of the fuel injection valve (5).

5. Fuel injection system according to one of Claims 1 to 4, **characterized in that** each receiving element (60) surrounds the inflow portion (30) of the fuel injection valve (5) inserted into the respective receiving element (60), and each inflow portion (30) has a second sealing element (66) which is slideably displaceable on the wall (67) of the receiving element.

6. Fuel injection system according to one of Claims 1 to 5, **characterized in that** at least one holding-down device (9) is provided, in order to hold each fuel injection valve (5) down in the assigned receiving bore (3) counter to the combustion pressure prevailing in the assigned combustion space (1).

7. Fuel injection system according to one of Claims 1 to 6, **characterized in that** the supporting surface (54) in the form of a spherical cap is formed on a supporting body (80) which can be inserted into the receiving bore (3).

8. Fuel injection system according to Claim 7, **characterized in that** the supporting body (80) is of annular design and surrounds the injection portion (4) of the fuel injection valve (5).

## Revendications

1. Installation d'injection de carburant pour l'injection directe de carburant dans au moins une chambre de combustion (1) d'un moteur à combustion interne, comprenant au moins un injecteur de carburant (5 pour chaque chambre de combustion (1), qui peut être inséré, au niveau d'un segment de pulvérisation (4), dans un perçage de réception correspondant (3) formé dans une culasse (2) du moteur à combustion interne, et qui présente une ouverture d'entrée de carburant (29) au niveau d'un segment d'arrivée (30) et une conduite de distribution de carburant (20) présentant pour chaque injecteur de carburant (5) une ouverture de sortie de carburant pouvant être reliée à l'ouverture d'entrée de carburant (29) de l'injecteur de carburant (5),
**caractérisée en ce qu'**
à chaque perçage de réception (3) est formée, sur le côté dirigé vers la conduite de distribution de carburant (20), une surface d'appui (54) en forme de calotte, sur laquelle un segment d'appui (53) d'un injecteur de carburant (5), inséré dans le perçage de réception (3), s'appuie de telle manière que l'injecteur de carburant (5) est fixé dans le perçage de réception (3) au niveau de son segment de pulvérisation (4) en pouvant pivoter dans une plage angulaire (α) prédéterminée, et qu'à chaque ouverture de sortie de carburant (63) de la conduite de distribution de carburant (20) est prévu un élément de réception (60) qui reçoit l'ouverture d'entrée de carburant (29) de l'injecteur de carburant (5) correspondant à joint étanche de telle manière qu'au niveau de son segment d'arrivée (30), l'injecteur de carburant (5) est fixé dans l'élément de réception (60) en pouvant pivoter dans une plage angulaire prédéterminée.

2. Installation d'injection de carburant selon la revendication 1,
**caractérisée en ce que**
chaque surface d'appui en forme de calotte (54) entoure concentriquement le perçage de réception (3) correspondant.

3. Installation d'injection de carburant selon la revendication 2,
**caractérisée en ce que**
le segment de pulvérisation (4) de chaque injecteur de carburant (5) est monté en pouvant pivoter dans des limites prédéterminées dans le perçage de réception (3) au niveau d'un premier élément d'étanchéité (52) et le centre (M) de la courbure de la surface frontale en forme de calotte (54) qui lui correspond se trouve dans la région du premier élément d'étanchéité (52).

4. Installation d'injection de carburant selon une des revendications 1 à 3,
**caractérisée en ce que**
le segment d'appui (53) de chaque injecteur de carburant (5) présente un appui de forme annulaire ou plusieurs appuis disposés en anneau (55, 56) qui peut ou peuvent être amené(s) à porter sur la surface d'appui en forme de calotte (54) correspondante indépendamment de la position de pivotement de l'injecteur de carburant (5).

5. Installation d'injection de carburant selon une des revendications 1 à 4,
**caractérisée en ce que**
chaque élément de réception (60) entoure le segment d'arrivée (30) de l'injecteur de carburant (5) inséré dans l'élément de réception (60) correspondant, et chaque segment d'arrivée (30) présente un deuxième élément d'étanchéité (66) mobile par translation à glissement le long de la paroi (67) de l'élément de réception.

6. Installation d'injection de carburant selon une des revendications 1 à 5,
**caractérisée en ce qu'**
il est prévu au moins un dispositif presseur (9) pour maintenir chaque injecteur de carburant (5) pressé dans le perçage de réception (3) correspondant, à l'encontre de la pression de combustion régnant dans la chambre de combustion (1) correspondante.

7. Installation d'injection de carburant selon une des revendications 1 à 6,
**caractérisée en ce que**
la surface d'appui en forme de calotte (54) est formée sur un corps d'appui (80) qui peut être inséré dans le perçage de réception (3).

8. Installation d'injection de carburant selon la revendication 7,
**caractérisée en ce que**
le corps d'appui (80) est de forme annulaire et entoure le segment de pulvérisation (4) de l'injecteur de carburant (5).
